# EUROPEAN PATENT SPECIFICATION

(11) **EP 4 108 990 B1**
(45) Date of publication and mention of the grant of the patent: **12.11.2025**
(21) Application number: 22180741.5
(22) Date of filing: 23.06.2022
(51) Int. Cl.: F23R 3/14, F23R 3/28, F23R 3/16

(54) **RADIAL EQUILIBRATED COMBUSTION NOZZLE ARRAY**
RADIAL ÄQUILIBRIERTE VERBRENNUNGSDÜSENANORDNUNG
RÉSEAU DE BUSES DE COMBUSTION RADIALEMENT ÉQUILIBRÉ

(30) Priority: 24.06.2021 US 202117356825
(43) Date of publication of application: 28.12.2022
(73) Proprietor: Collins Engine Nozzles, Inc., West Des Moines, IA 50265 (US)
(72) Inventor: RYON, Jason, Carlisle, IA 50047 (US); ZINK, Gregory A., Des Moines, IA 50310 (US); PROCIW, Lev A., Johnston, IA 50131 (US)
(74) Representative: Dehns

(56) References cited:
- JP-A- 2011 058 775
- US-A1- 2012 094 239
- US-A1- 2015 361 896
- US-A1- 2016 245 187
- US-A1- 2019 011 131
- US-A1- 2019 309 950

## Description

### Background

### Technical Field

This disclosure relates to fuel injection in gas turbine engines, and more particularly to fuel injection in systems with multi-nozzle arrays.

### Background of Related Art

Fuel and air distribution within a combustor for a gas turbine engine is a significant factor for both temperature profiles within the combustor volume as well as pollutant emissions such as NOₓ. Multi-point lean direct injection (MLDI) arrays have radial stages of fuel injectors which inject nearly all of the air into the combustor.

MLDI arrays have provided an advance over previous injection systems in terms of temperature profiles as well as emissions, but there is an ongoing need for further improved fuel injection. This disclosure provides a solution for this need.

JP2011058775A relates to a gas turbine combustor.

US 2016/245187 A1 relates to a fuel injection system according to the preamble of claim 1.

### SUMMARY

A fuel injection system for a gas turbine engine is provided as claimed in claim 1 and includes a first plurality of fuel nozzles arrayed in a circular pattern. Each of the nozzles in the first plurality of fuel nozzles includes a first airflow area defined therethrough. A second plurality of fuel nozzles is included radially inward from the first plurality of fuel nozzles. Each of the nozzles in the second plurality of fuel nozzles includes a second airflow area defined therethrough. The first airflow area is larger than the second airflow area.

A third plurality of fuel nozzles is radially inward from the second plurality of fuel nozzles. Each of the nozzles in the third plurality of fuel nozzles includes a third airflow area defined therethrough. The second airflow area is larger than the third airflow area. Each of the first, second, and third pluralities of fuel nozzles includes an equal number of fuel nozzles. At least one additional plurality of fuel nozzles can be included, each radially inward from another one of the pluralities of fuel nozzles, and each having a smaller airflow area than whichever one of the plurality of fuel nozzles is immediately radially outward therefrom.

Each fuel nozzle in the first plurality of fuel nozzles can have a first fuel flow area defined therethrough. Each fuel nozzle in the second plurality of fuel nozzles can have a second fuel flow area defined therethrough. Each nozzle in the third plurality of fuel nozzles can have a third flow area defined therethrough. The second fuel flow area can be smaller than the first fuel flow area in proportion to how much smaller the second airflow area is relative to the first air flow area. The third fuel flow area can be smaller than the second fuel flow area in proportion to how much smaller the third airflow area is relative to the second air flow area. It is also contemplated that the first, second, and third fuel flow areas can each be fed by separate respective fuel manifolds, wherein the first fuel flow area is pressurized higher than the second fuel flow area, which is pressurized higher than third fuel flow area, wherein pressurization of the separate respective fuel manifolds are proportionate to the respective air flow areas of the first, second, and third pluralities of fuel nozzles.

The third plurality of fuel nozzles is positioned within an annulus having an inner diameter D1 and an outer diameter D2. The second plurality of fuel nozzles is positioned within an annulus having an inner diameter D2 and an outer diameter D3. The first plurality of fuel nozzles is positioned within an annulus having an inner diameter D3 and an outer diameter D4, wherein D4-D3 = D3-D2 = D2-D1.

Each fuel nozzle in the first plurality of fuel nozzles can have a channel height defined between a prefilmer and an outer air shroud, Hₒ1. Each fuel nozzle in the second plurality of fuel nozzles can have a channel height defined between a prefilmer and an outer air shroud, Hₒ2. Each fuel nozzle in the third plurality of fuel nozzles can have a channel height defined between a prefilmer and an outer air shroud, Hₒ3, wherein Hₒ1>Hₒ2>Hₒ3 to achieve the difference in the first and second airflow areas, and the difference between the second and third airflow areas. Each fuel nozzle in the first, second, and third pluralities of fuel nozzles can have an equal outer air shroud diameter.

Each fuel nozzle in the first, second, and third pluralities of fuel nozzles can have an outer air circuit comprised of discrete holes distributed circumferentially around the nozzle. The discrete holes of the first plurality of fuel nozzles can have a first hole diameter dₒ1, the discrete holes of the second plurality of fuel nozzles can have a second hole diameter dₒ2, and the discrete holes of the third plurality of fuel nozzles can have a third hole diameter dₒ3. The hole diameters can conform to the inequality dₒ1>dₒ2>dₒ3 to achieve the difference in the first and second airflow areas, and the difference between the second and third airflow areas. It is also contemplated that it is possible for dₒ1 = dₒ2 = dₒ3, wherein each fuel nozzle of the first plurality of fuel nozzles has more discrete holes than those of the second plurality of fuel nozzles, and wherein each fuel nozzle of the second plurality of fuel nozzles has more discrete holes than those of the third plurality of fuel nozzles to achieve the difference in the first and second airflow areas, and the difference between the second and third airflow areas.

Each fuel nozzle in the first, second, and third pluralities of fuel nozzles can have an outer air circuit comprised of vanes with vane passages circumferentially spaced apart by the vanes. The vane passages of the first plurality of fuel nozzles can have a larger vane passage area aₒ1 than that (aₒ2) of the second plurality of fuel nozzles. The vane passages of the second plurality of fuel nozzles can have a larger vane passage area (aₒ2) larger than that (aₒ3) of the third plurality of fuel nozzles. This allows for achieving the difference in the first and second airflow areas, and the difference between the second and third airflow areas. It is also contemplated that the vane passage area aₒ1 can have a larger vane passage height and/or larger vane passage width than the vane passage area aₒ2, and wherein the vane passage area aₒ2 can have a larger vane passage height and/or larger vane passage width than a third vane passage area aₒ3 of the third plurality of fuel nozzles.

Each fuel nozzle in the first, second, and third pluralities of fuel nozzles can have an inner air circuit comprised of discrete holes distributed circumferentially around the nozzle. The discrete holes of the first plurality of fuel nozzles can have a first hole diameter dᵢ1, the discrete holes of the second plurality of fuel nozzles can have a second hole diameter dᵢ2, and the discrete holes of the third plurality of fuel nozzles can have a third hole diameter dᵢ3. The hole diameters can conform to the inequality dᵢ1> dᵢ2> dᵢ3 to achieve the difference in the first and second airflow areas, and the difference between the second and third airflow areas. It is also contemplated that the hole diameters can be dᵢ1 = dᵢ2 = dᵢ3, and each fuel nozzle of the first plurality of fuel nozzles can have more discrete holes than those of the second plurality of fuel nozzles, and each fuel nozzle of the second plurality of fuel nozzles can have more discrete holes than those of the third plurality of fuel nozzles to achieve the difference in the first and second airflow areas, and the difference between the second and third airflow areas.

Each fuel nozzle in the first, second, and third pluralities of fuel nozzles can have an inner air circuit comprised of vanes with vane passages circumferentially spaced apart by the vanes. The vane passages of the first plurality of fuel nozzles can have a larger vane passage area aᵢ1 than that (aᵢ2) of the second plurality of fuel nozzles, and the vane passages of the second plurality of fuel nozzles can have a larger vane passage area (aᵢ2) larger than that (aᵢ3) of the third plurality of fuel nozzles. This can achieve the difference in the first and second airflow areas, and the difference between the second and third airflow areas. It is also contemplated that the vane passage area aᵢ1 can have a larger vane passage height and/or larger vane passage width than the vane passage area aᵢ2, and wherein the vane passage area aᵢ2 can have a larger vane passage height and/or larger vane passage width than a third vane passage area aᵢ3 of the third plurality of fuel nozzles.

These and other features will become more readily apparent from the following detailed description and the accompanying drawings.

### BRIEF DESCRIPTION OF THE DRAWINGS

Fig. 1 is a schematic, cross-sectional perspective view of a portion of a gas turbine engine constructed in accordance with the present disclosure, showing the nozzles for issuing air from the compressor section into the combustor;
Fig. 2 is a schematic, downstream end elevation view of the combustor of Fig. 1, showing the arrangement of the nozzles;
Fig. 3 is a schematic cross-sectional side elevation view of one of the nozzles of Fig. 2, showing how the outer air circuit can be varied to vary the effective area;
Figs. 4, 5, and 6 are schematic cross-sectional side elevation, perspective, and end elevation views, respectively, of another embodiment of nozzle having discrete holes in the outer air circuit;
Figs. 7 and 8 are schematic cross-sectional side elevation and side elevation views showing another embodiment of an outer air circuit with vanes, wherein the outer portions of the nozzle are removed in Fig. 8 to show the vanes;
Figs. 9 and 10 are schematic cross-sectional side elevation and downstream end elevation views of another embodiment of nozzle, wherein the discrete holes of the inner air circuit can vary in diameter from one nozzle to another to provide different effective areas for air flow; and
Figs. 11 and 12 are schematic cross-sectional side elevation and downstream end elevation views of another embodiment of nozzle, wherein vane passages in an inner air circuit can vary in dimension from one nozzle to another to provide different effective areas for air flow.

### DETAILED DESCRIPTION

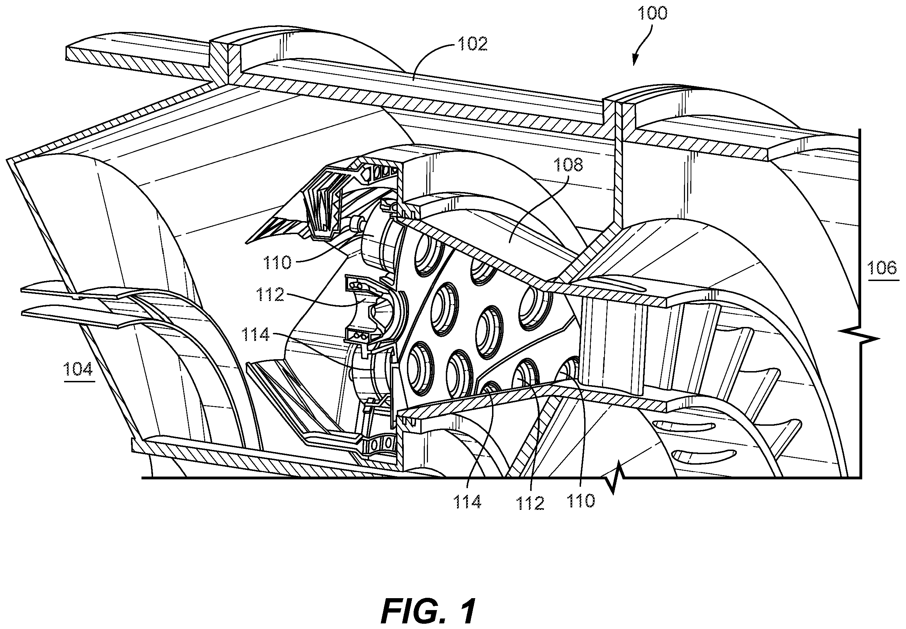

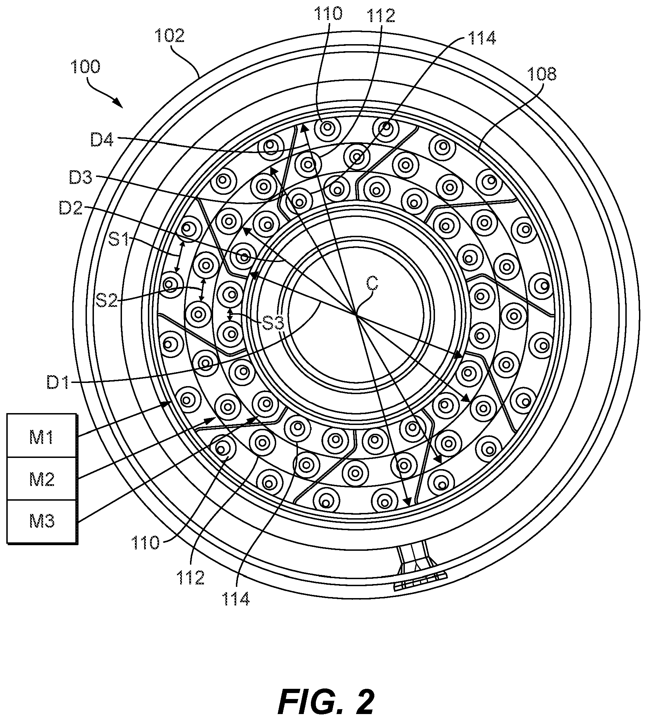

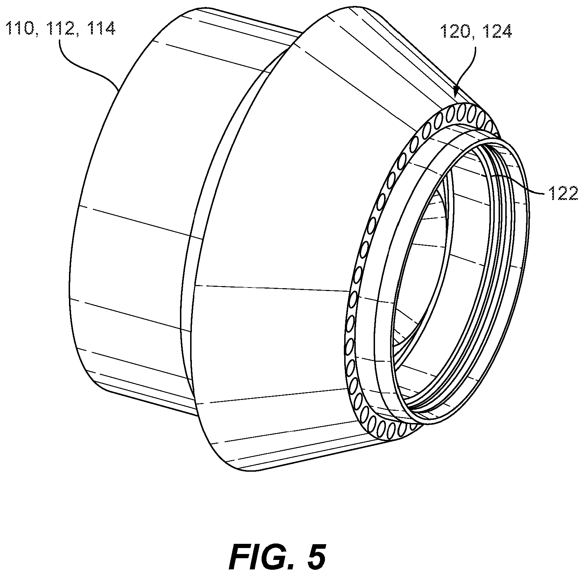

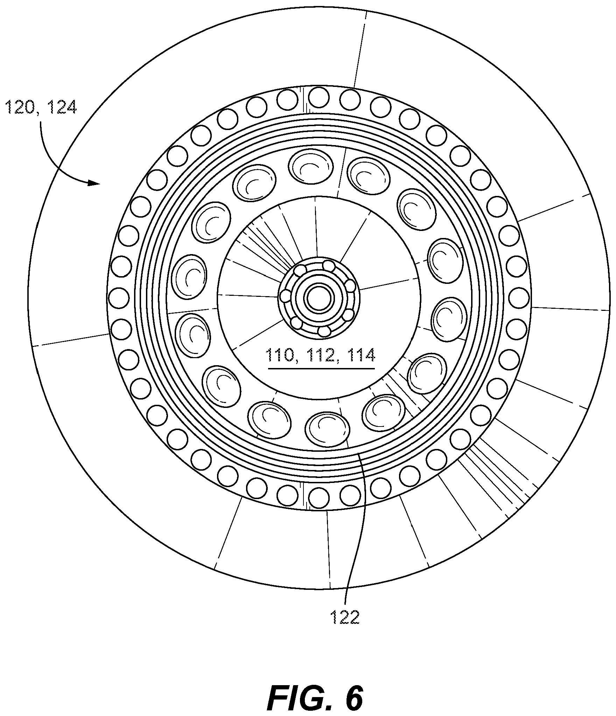

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. Other embodiments of systems in accordance with the disclosure, or aspects thereof, are provided in Figs. 2-12, as will be described. The systems and methods described herein can be used to improve combustion uniformity in multi-point lean direct injection (MLDI) combustion systems for gas turbine engines.

The fuel injection system 100 is part of a gas turbine engine 102 that includes a compressor section 104 that feeds compressed gas to a combustor 108, which issues combustion products to a turbine section 106. The compressed air from the compressor section 104 enters the combustor 108 through fuel nozzles, specifically, three rings or pluralities of fuel nozzles 110, 112, 114. The fuel for combustion is also issued from the fuel nozzles 110, 112, 114.

With reference now to Fig. 2, a first plurality of fuel nozzles 110 are arrayed in a circular pattern around the center axis C of the engine 102. A second plurality of fuel nozzles 112 are arrayed radially inward from the first plurality of fuel nozzles 110. The first airflow area A1 is larger than the second airflow area A2. A1 and A2 are not reference characters in the drawings, but are used in mathematical expressions below and are further described below with reference to the Figures. The circumferential spacing S1 between each adjacent pair of nozzles 110 is wider than the circumferential spacing S2 between each adjacent pair of the nozzles 112, which is in turn greater than the circumferential spacing S3 between each adjacent pair of the nozzles 114. There are the same number of nozzles 110 in the outer most first plurality of fuel nozzles 110 as there are in the second plurality of fuel nozzles 112 as there are in the inner most third plurality of fuel nozzles 114. The third plurality of fuel nozzles 114 is positioned within an annulus having an inner diameter D1 and an outer diameter D2. The second plurality of fuel nozzles 112 is positioned within an annulus having an inner diameter D2 and an outer diameter D3. The first plurality of fuel nozzles 110 is positioned within an annulus having an inner diameter D3 and an outer diameter D4, wherein D4-D3 = D3-D2 = D2-D1. Therefore, each nozzle 110 services a larger volume V1 of the combustion space than does each nozzle 112, and each nozzle 112 services a larger volume V2 than that (V3) serviced by each nozzle 114. V1 is not a reference character in the Figures, but is a conical annular volume bounded between D4 and D3 of Fig. 2. Similarly, V2 is a conical annular volume bounded by D3 and D2, and V3 is an annular volume bounded by D2 and D1.

Each of the nozzles 110 in the first plurality of fuel nozzles 100 includes a first effective airflow area A1 defined therethrough (A1 is not shown in the drawings, but is used in the inequality below and is further described below with reference to the Figures). Each of the nozzles 112 in the second plurality of fuel nozzles 112 includes a second airflow area A2 defined therethrough (A2 is not shown in the drawings, but is used in the inequality below and is further described below with reference to the Figures). A third plurality of fuel nozzles 114 is radially inward from the second plurality of fuel nozzles 112. Each of the nozzles 114 in the third plurality of fuel nozzles 114 includes a third airflow area A3 defined therethrough (A3 is not shown in the drawings, but is used in the inequality below and is further described below with reference to the Figures). The second airflow area A2 is larger than the third airflow area A3. Given that all three pluralities of fuel nozzles 110, 112, 114 have the same pressure drop across the nozzles 110, 112, 114, the inequality A1>A2>A3 provides for uniform volumetric flow of air **into the** combustor, compensating for the different respective volumes V1, V2, V3 serviced by each nozzle 110, 112, 114 for uniform combustion. The uniform combustion reduces temperature variation across the combustion volume, which reduces the amount of emission of undesired exhaust products such as NOₓ.

Similar to airflow, the fuel flow through each nozzle 110, 112, 114 can be tailored for its radial position in the combustor 108. Each fuel nozzle 110 in the first plurality of fuel nozzles 110 has a first fuel flow area FA1 defined therethrough (FA1 is not shown in the drawings, but is governed by an inequality given below). Each fuel nozzle 112 in the second plurality of fuel nozzles 112 has a second fuel flow area FA2 defined therethrough (FA1 is not shown in the drawings, but is governed by an inequality given below). Each nozzle 114 in the third plurality of fuel nozzles 114 has a third flow area FA3 defined therethrough (FA1 is not shown in the drawings, but is governed by an inequality given below). The fuel flow areas FA1, FA2, FA3 conform to the inequality FA1 > FA2 > FA3. The second fuel flow area FA2 is smaller than the first fuel flow area FA1 in proportion to how much smaller the second airflow area A2 is relative to the first air flow area A1. Similarly, the third fuel flow area FA3 is smaller than the second fuel flow area FA2 in proportion to how much smaller the third airflow area A3 is relative to the second air flow area A2. This relationship allows for the fuel nozzles 110, 112, 114 to all be set to the same fuel pressure and provide volumetrically even fuel distribution within the combustor 108. It is also contemplated that the first, second, and third fuel flow areas FA1, FA2, FA3 can each be fed by separate respective fuel manifolds M1, M2, M3. In this case, the first fuel flow area FA1 is pressurized higher than the second fuel flow area FA2, which is pressurized higher than third fuel flow area FA3. Thus pressurization of the separate respective fuel manifolds M1, M2, M3 can be proportionate to the respective air flow areas A1, A2, A3 of the first, second, and third pluralities of fuel nozzles 110, 112, 114 for uniform volumetric issuance of fuel into the combustor 108.

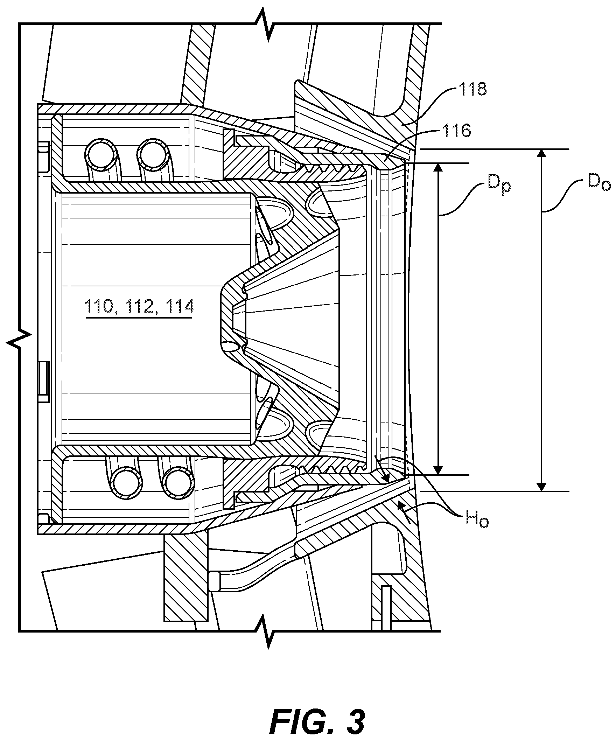

Referring now to Fig. 3, one nozzle 110, 112, 114 is shown, as representative of all of the nozzles 110, 112, 114. Each fuel nozzle 110 in the first plurality of fuel nozzles 110 has a channel height Hₒ1 defined between a prefilmer 116 and an outer air shroud 118, where Hₒ is labeled generically for all the nozzles 110, 112, 114 in Fig. 3. Similarly, each fuel nozzle 112 in the second plurality of fuel nozzles 112 has a channel height Hₒ2 defined between a prefilmer and an outer air shroud, , and each fuel nozzle 114 in the third plurality of fuel nozzles 114 has a channel height Hₒ3 defined between a prefilmer and an outer air shroud 118. The channel heights can be made to conform to the inequality Hₒ1 > Hₒ2 > Hₒ3 to achieve the difference in the first and second airflow areas A1, A2, and the difference between the second and third airflow areas A2, A3 as explained above with respect to Fig. 2. Each fuel nozzle 110, 112, 114 can have the same outer air shroud diameter Dₒ, in which case the prefilmer diameters Dₚ vary among the three pluralities of fuel nozzles 110, 112, 114, respectively. It is also considered that the prefilmer diameters Dₚ can be the same across all the nozzles 110, 112, 114, and the outer air shroud diameters Dₒ can be varied from one plurality of fuel nozzles to another to achieve the air flow areas A1, A2, A3, or that both the diameters Dₚ and Dₒ can vary. For example, if Dₚ is increased, and Hₒ is kept constant, the effective area of the outer air circuit will be increased. Note that Fig. 3 shows the diameters of Dₒ, Dₚ, which for each given nozzle 110, 112, 114 gives an outer air circuit effective area that is proportional to π(Dₒ²-Dₚ²)/4.

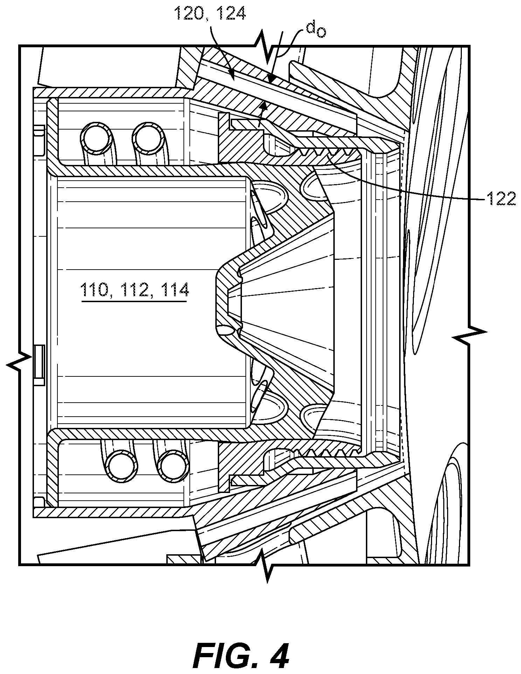

With reference now to Figs. 4, 5, and 6, another nozzle is shown as representative of all of the nozzles 110, 112, 114. Each fuel nozzle 110, 112, 114 has an outer air circuit 120 outboard of its respective fuel circuit 122 comprised of discrete holes 124 distributed circumferentially around the nozzle 110, 112, 114, each individual hole having hole diameter dₒ. The discrete holes 124 of the first plurality of fuel nozzles 110 have a first hole diameter dₒ1, the discrete holes 124 of the second plurality of fuel nozzles 112 have a second hole diameter dₒ2, and the discrete holes 124 of the third plurality of fuel nozzles 114 have a third hole diameter dₒ3. The hole diameters can conform to the inequality dₒ1 > dₒ2 > dₒ3 to achieve the difference in the first and second airflow areas A1, A2, and the difference between the second and third airflow areas A2, A3 as explained above with reference to Fig. 2. It is also contemplated that it is possible for dₒ1 = dₒ2 = dₒ3, wherein each fuel nozzle 110 of the first plurality of fuel nozzles 110 has more discrete holes 124 than those of the second plurality of fuel nozzles 114, and wherein each fuel nozzle 112 of the second plurality of fuel nozzles 112 has more discrete holes 124 than those of the third plurality of fuel nozzles 114 to achieve the difference in the first and second airflow areas A1, A2, and the difference between the second and third airflow areas A2, A3.

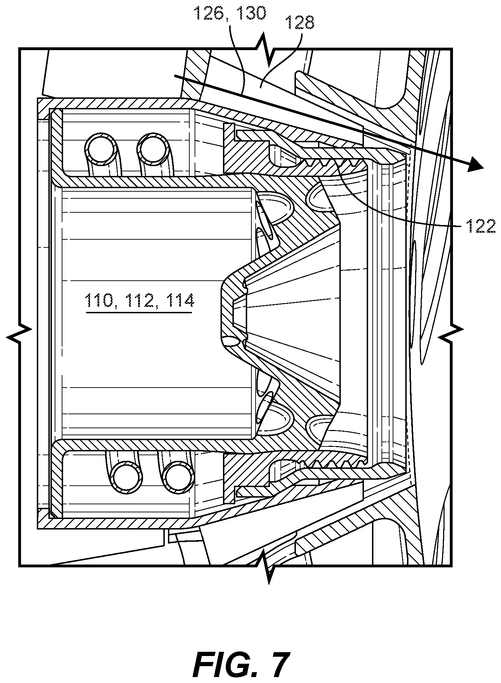

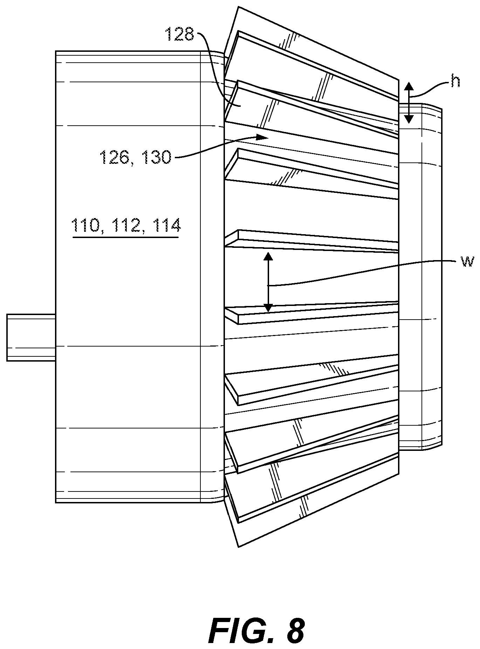

With reference now to Figs. 7 and 8, another way in which the differing air flow areas A1, A2, and A3 is shown, where one nozzle is shown as representative of each of the different nozzles 110, 112, 114. Each fuel nozzle 110, 112, 114 has an outer air circuit 126, outboard of its respective fuel circuit 122, comprised of vanes 128 with vane passages 130 circumferentially spaced apart by the vanes 128. The vane passages 130 have cross-sectional flow areas aₒ, i.e. where aₒ is the product of the width w and height h of the individual vane passage 130. The vane passages 130 of the first plurality of fuel nozzles 110 have a larger vane passage area aₒ1 than that (aₒ2) of the second plurality of fuel nozzles 112. The vane passages 130 of the second plurality of fuel nozzles 112 have a larger vane passage area (aₒ2) larger than that (aₒ3) of the third plurality of fuel nozzles 114. This allows for achieving the difference in the first and second airflow areas A1, A2, and the difference between the second and third airflow areas A2, A3 as described above with reference to Fig. 2. It is also contemplated that the vane passage area aₒ1 can have a larger vane passage height h and/or larger vane passage width w than the vane passage area aₒ2, and wherein the vane passage area aₒ2 has a larger vane passage height h and/or larger vane passage width w than a third vane passage area aₒ3 of the third plurality of fuel nozzles 114. It is also contemplated that the thickness of the vanes 128 can be varied among nozzles 110, 112, 114 so the number of vane passages 130 varies to achieve the differences between A1, A2, and A3.

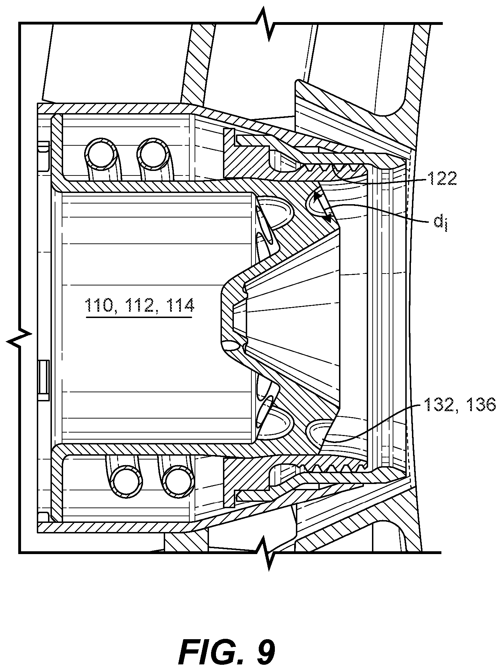

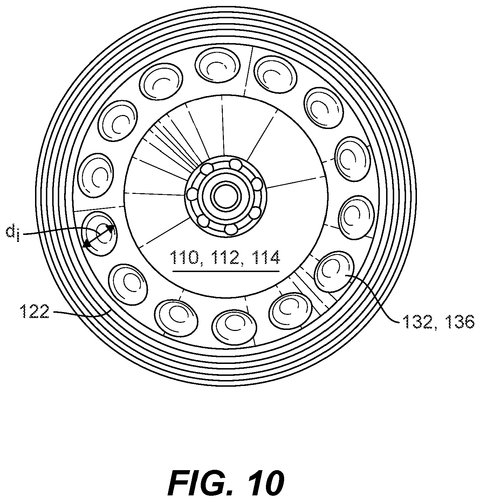

With reference now to Figs. 9 and 10, another way in which the differing air flow areas A1, A2, and A3 is shown, where one nozzle is shown as representative of each of the different nozzles 110, 112, 114. Each fuel nozzle 110, 112, 114 has an inner air circuit 132 inboard of its respective fuel circuit 122 comprised of discrete holes 136 distributed circumferentially around the nozzle 110, 112, 114. The discrete holes 136 of the first plurality of fuel nozzles 110 have a first hole diameter dᵢ1, the discrete holes 136 of the second plurality of fuel nozzles 112 have a second hole diameter dᵢ2, and the discrete holes 136 of the third plurality of fuel nozzles 114 have a third hole diameter dᵢ3. The hole diameters can conform to the inequality dᵢ1> dᵢ2> dᵢ3 to achieve the difference in the first and second airflow areas A1, A2, and the difference between the second and third airflow areas A2, A3. It is also contemplated that the hole diameters can be dᵢ1 = dᵢ2 = dᵢ3, where each fuel nozzle 110 of the first plurality of fuel nozzles 110 has more discrete holes 136 than those of the second plurality of fuel nozzles 112, and wherein each fuel nozzle 112 of the second plurality of fuel nozzles 112 has more discrete holes 136 than those of the third plurality of fuel nozzles 114 to achieve the difference in the first and second airflow areas A1, A2, and the difference between the second and third airflow areas A2, A3.

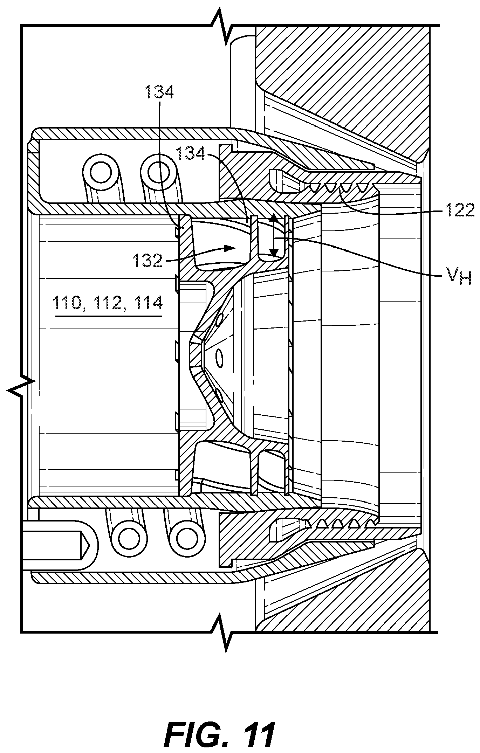

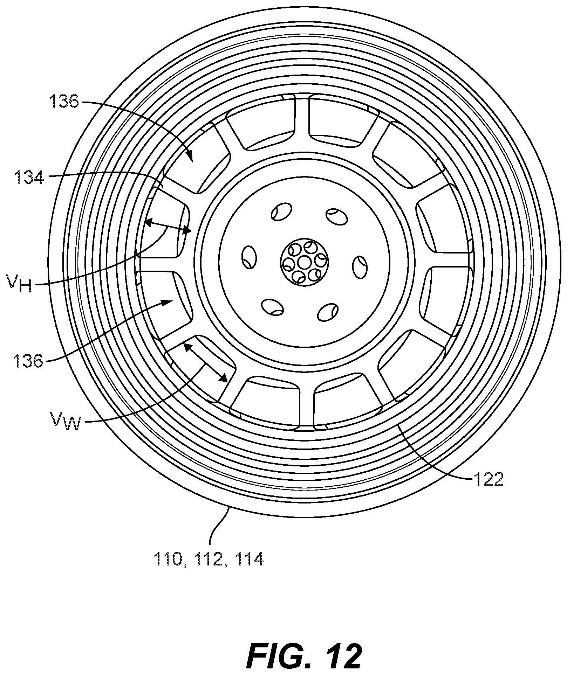

With reference now to Figs. 11 and 12, another way in which the differing air flow areas A1, A2, and A3 is shown, where one nozzle is shown as representative of each of the different nozzles 110, 112, 114. Each fuel nozzle 110, 112, 114 has an inner air circuit 132 (inboard of the fuel circuit 122) comprised of vanes 134 with vane passages 136 circumferentially spaced apart by the vanes 134. The vane passages 136 of fuel nozzles 110 have a larger vane passage area aᵢ1 than that (aᵢ2) of the second plurality of fuel nozzles 112, and the vane passages of the second plurality of fuel nozzles 112 have a larger vane passage area (aᵢ2) larger than that (aᵢ3) of the third plurality of fuel nozzles 114. This can achieve the difference in the first and second airflow areas A1, A2, and the difference between the second and third airflow areas A2, A3. It is also contemplated that the vane passage area aᵢ1 has a larger vane passage height V_{H} and/or larger vane passage width Vw than the vane passage area aᵢ2, and wherein the vane passage area aᵢ2 has a larger vane passage height V_{H} and/or larger vane passage width Vw than a third vane passage area aᵢ3 of the third plurality of fuel nozzles 114. It is also possible to change the number of vane passages 136 in addition to or in lieu of changing the vane passage area aᵢ.

While shown and described herein with three different pluralities of fuel nozzles, 110, 112, 114, those skilled in the art will readily appreciate that any suitable number rings or pluralities of nozzles can be used, including 2, 4, 5, or more. Regardless of how many rings or pluralities of nozzles are used, each ring or plurality radially inward from another one of the pluralities of fuel nozzles has a smaller airflow area than whichever one of the plurality of fuel nozzles is immediately radially outward therefrom. Moreover, those skilled in the art will readily appreciate that the various strategies of varying effective area described above with reference to Figs 3-12 can be used in combination with one another without departing from the scope of this disclosure.

While the apparatus and methods of the subject disclosure have been shown and described, those skilled in the art will readily appreciate that changes and/or modifications may be made thereto without departing from the scope of the claims.

## Claims

1. A fuel injection system (100) for a gas turbine engine (102) comprising:
a first plurality of fuel nozzles (110) arrayed in a circular pattern, wherein each of the nozzles in the first plurality of fuel nozzles (110) includes a first airflow area, A1, defined therethrough and services a first volume of combustion space, V1;
a second plurality of fuel nozzles (112) radially inward from the first plurality of fuel nozzles (110), wherein each of the nozzles in the second plurality of fuel nozzles includes a second airflow area, A2, defined therethrough and services a second volume of combustion space, V2; and
further comprising a third plurality of fuel nozzles (114) radially inward from the second plurality of fuel nozzles (112), wherein each of the nozzles in the third plurality of fuel nozzles (113) includes a third airflow area, A3, defined therethrough and services a third volume of combustion space, V3; and
wherein each of the first, second, and third pluralities of fuel nozzles (110, 112, 114) includes an equal number of fuel nozzles;
wherein each nozzle (110) services a larger volume V1 of the combustion space than does each nozzle (112), and each nozzle (112) services a larger volume V2 than that V3 serviced by each nozzle (114);
wherein the third plurality of fuel nozzles (114) is positioned within an annulus having an inner diameter (D1) and an outer diameter (D2),
wherein the second plurality of fuel nozzles (112) is positioned within an annulus having an inner diameter (D2) and an outer diameter (D3);
wherein the first plurality of fuel nozzles (110) is positioned within an annulus having an inner diameter (D3) and an outer diameter (D4),
and wherein D4-D3 = D3-D2 = D2-D1;
**characterized in that**
the first airflow area, A1, is larger than the second airflow area, A2, and the second airflow area, A2, is larger than the third airflow area, A3 so as to compensate for the different respective volumes V1, V2, V3 serviced by each nozzle (110, 112, 114) for uniform combustion.

2. The system as recited in claim 1, further comprising at least one additional plurality of fuel nozzles, each radially inward from another one of the pluralities of fuel nozzles, and each having a smaller airflow area than one of the plurality of fuel nozzles that is immediately radially outward therefrom.

3. The system as recited in any preceding claim,
wherein the first, second, and third fuel flow areas are each fed by separate respective fuel manifolds, wherein the first fuel flow area is pressurized higher than the second fuel flow area, which is pressurized higher than third fuel flow area, wherein pressurization of the separate respective fuel manifolds are proportionate to the respective air flow areas of the first, second, and third pluralities of fuel nozzles.

4. The system as recited in any preceding claim,
wherein each fuel nozzle in the first plurality of fuel nozzles (110) has a channel height defined between a prefilmer and an outer air shroud, Hₒ1,
wherein each fuel nozzle in the second plurality of fuel nozzles (112) has a channel height defined between a prefilmer and an outer air shroud, Hₒ2,
wherein each fuel nozzle in the third plurality of fuel nozzles (114) has a channel height defined between a prefilmer and an outer air shroud, Hₒ3, and
wherein Hₒ1>Hₒ2>Hₒ3 to achieve the difference in the first and second airflow areas, and the difference between the second and third airflow areas.

5. The system as recited in claim 4,
wherein each fuel nozzle in the first, second, and third pluralities of fuel nozzles has an equal outer air shroud diameter.

6. The system as recited in any preceding claim, wherein each fuel nozzle in the first, second, and third pluralities of fuel nozzles (110, 112, 114) has an outer air circuit comprised of discrete holes distributed circumferentially around the nozzle,
wherein the discrete holes of the first plurality of fuel nozzles (110) have a first hole diameter dₒ1,
wherein the discrete holes of the second plurality of fuel nozzles (112) have a second hole diameter dₒ2,
wherein the discrete holes of the third plurality of fuel nozzles (114) have a third hole diameter dₒ3.

7. The system as recited in claim 6, wherein dₒ1>dₒ2>dₒ3 to achieve the difference in the first and second airflow areas, and the difference between the second and third airflow areas, and/or
wherein dₒ1 = dₒ2 = dₒ3, and wherein each fuel nozzle of the first plurality of fuel nozzles (110) has more discrete holes than those of the second plurality of fuel nozzles (112), and wherein each fuel nozzle of the second plurality of fuel nozzles (112) has more discrete holes than those of the third plurality of fuel nozzles (114) to achieve the difference in the first and second airflow areas, and the difference between the second and third airflow areas.

8. The system as recited in any preceding claim, wherein each fuel nozzle in the first, second, and third pluralities of fuel nozzles (110, 112, 114) has an outer air circuit (126) comprised of vanes (128) with vane passages (130) circumferentially spaced apart by the vanes (128), wherein the vane passages (130) of the first plurality of fuel nozzles (110) have a larger vane passage area aₒ1 than that (aₒ2) of the second plurality of fuel nozzles (112), and wherein the vane passages of the second plurality of fuel nozzles (112) have a larger vane passage area (aₒ2) larger than that (aₒ3) of the third plurality of fuel nozzles (114), to achieve the difference in the first and second airflow areas, and the difference between the second and third airflow areas.

9. the system as recited in claim 8, wherein the vane passage area aₒ1 has a larger vane passage height and/or larger vane passage width than the vane passage area aₒ2, and wherein the vane passage area aₒ2 has a larger vane passage height and/or larger vane passage width than a third vane passage area aₒ3 of the third plurality of fuel nozzles (114).

10. The system as recited in any preceding claim, wherein each fuel nozzle in the first, second, and third pluralities of fuel nozzles (110, 112, 114) has an inner air circuit (132) comprised of discrete holes (136) distributed circumferentially around the nozzle,
wherein the discrete holes (136) of the first plurality of fuel nozzles (110) have a first hole diameter dᵢ1,
wherein the discrete holes (136) of the second plurality of fuel nozzles (112) have a second hole diameter dᵢ2,
wherein the discrete holes (136) of the third plurality of fuel nozzles (114) have a third hole diameter dᵢ3.

11. The system as recited in claim 10, wherein dᵢ1> dᵢ2> dᵢ3 to achieve the difference in the first and second airflow areas, and the difference between the second and third airflow areas

12. The system as recited in claims 10 or 11, wherein dᵢ1 = dᵢ2 = dᵢ3, and wherein each fuel nozzle of the first plurality of fuel nozzles (110) has more discrete holes (136) than those of the second plurality of fuel nozzles (112), and wherein each fuel nozzle of the second plurality of fuel nozzles (112) has more discrete holes (136) than those of the third plurality of fuel nozzles (114) to achieve the difference in the first and second airflow areas, and the difference between the second and third airflow areas.

13. The system as recited in any preceding claim, wherein each fuel nozzle in the first, second, and third pluralities of fuel nozzles (110, 112, 114) has an inner air circuit comprised of vanes with vane passages circumferentially spaced apart by the vanes, wherein the vane passages of the first plurality of fuel nozzles (110) have a larger vane passage area aᵢ1 than that (aᵢ2) of the second plurality of fuel nozzles (112), and wherein the vane passages of the second plurality of fuel nozzles (112) have a larger vane passage area (aᵢ2) larger than that (aᵢ3) of the third plurality of fuel nozzles (114), to achieve the difference in the first and second airflow areas, and the difference between the second and third airflow areas.

14. The system as recited in claim 13, wherein the vane passage area aᵢ1 has a larger vane passage height and/or larger vane passage width than the vane passage area aᵢ2, and wherein the vane passage area aᵢ2 has a larger vane passage height and/or larger vane passage width than a third vane passage area aᵢ3 of the third plurality of fuel nozzles.

## Patentansprüche

1. Kraftstoffeinspritzsystem (100) für ein Gasturbinentriebwerk (102), umfassend:
eine erste Vielzahl von Kraftstoffdüsen (110), die in einem kreisförmigen Muster angeordnet sind, wobei jede der Düsen der ersten Vielzahl von Kraftstoffdüsen (110) einen ersten Luftstrombereich, A1, beinhaltet, der dadurch definiert ist und ein erstes Volumen eines Verbrennungsraums, V1, versorgt;
eine zweite Vielzahl von Kraftstoffdüsen (112) radial nach innen von der ersten Vielzahl von Kraftstoffdüsen (110), wobei jede der Düsen der zweiten Vielzahl von Kraftstoffdüsen einen zweiten Luftstrombereich, A2, beinhaltet, der dadurch definiert ist und ein zweites Volumen eines Verbrennungsraums, V2, versorgt; und ferner umfassend eine dritte Vielzahl von Kraftstoffdüsen (114), radial nach innen von der zweiten Vielzahl von Kraftstoffdüsen (112), wobei jede der Düsen der dritten Vielzahl von Kraftstoffdüsen (113) einen dritten Luftstrombereich, A3, beinhaltet, der dadurch definiert ist und ein drittes Volumen eines Verbrennungsraums, V3, versorgt; und
wobei jede der ersten, zweiten und dritten Vielzahlen von Kraftstoffdüsen (110, 112, 114) eine gleiche Anzahl von Kraftstoffdüsen beinhaltet;
wobei jede Düse (110) ein größeres Volumen V1 des Verbrennungsraums versorgt als jede Düse (112), und jede Düse (112) ein größeres Volumen V2 versorgt als das von jeder Düse (114) versorgte Volumen V3;
wobei die dritte Vielzahl von Kraftstoffdüsen (114) innerhalb eines Ringraums mit einem inneren Durchmesser (D1) und einem äußeren Durchmesser (D2) positioniert ist,
wobei die zweite Vielzahl von Kraftstoffdüsen (112) innerhalb eines Ringraums mit einem inneren Durchmesser (D2) und einem äußeren Durchmesser (D3) positioniert ist;
wobei die erste Vielzahl von Kraftstoffdüsen (110) innerhalb eines Ringraums mit einem inneren Durchmesser (D3) und einem äußeren Durchmesser (D4) positioniert ist,
und wobei D4-D3 = D3-D2 = D2-D1;
**dadurch gekennzeichnet, dass**
der erste Luftstrombereich, A1, größer ist als der zweite Luftstrombereich, A2, und der zweite Luftstrombereich, A2, größer ist als der dritte Luftstrombereich, A3, um die unterschiedlichen Volumina V1, V2, V3, die von jeder Düse (110, 112, 114) versorgt werden, für eine gleichmäßige Verbrennung auszugleichen.

2. System nach Anspruch 1, ferner umfassend mindestens eine zusätzliche Vielzahl von Kraftstoffdüsen, jeweils radial nach innen von einer anderen der Vielzahl von Kraftstoffdüsen und jeweils einen kleineren Luftstrombereich aufweisend als eine der Vielzahl von Kraftstoffdüsen, unmittelbar radial nach außen davon.

3. System nach einem der vorhergehenden Ansprüche,
wobei die ersten, zweiten und dritten Kraftstoffströmungsbereiche jeweils von separaten entsprechenden Kraftstoffverteilern gespeist werden, wobei der erste Kraftstoffströmungsbereich mit einem höheren Druck versehen ist als der zweite Kraftstoffströmungsbereich, der mit einem höheren Druck versehen ist als der dritte Kraftstoffströmungsbereich, wobei der Druck der separaten entsprechenden Kraftstoffverteiler proportional zu den jeweiligen Luftstrombereichen der ersten, zweiten und dritten Vielzahl von Kraftstoffdüsen ist.

4. System nach einem der vorhergehenden Ansprüche,
wobei jede Kraftstoffdüse der ersten Vielzahl von Kraftstoffdüsen (110) eine zwischen einer Vormischlippe und einem äußeren Luftmantel definierte Kanalhöhe Hₒ1 aufweist,
wobei jede Kraftstoffdüse der zweiten Vielzahl von Kraftstoffdüsen (112) eine zwischen einer Vormischlippe und einem äußeren Luftmantel definierte Kanalhöhe Hₒ2 aufweist,
wobei jede Kraftstoffdüse der dritten Vielzahl von Kraftstoffdüsen (114) eine zwischen einer Vormischlippe und einem äußeren Luftmantel definierte Kanalhöhe Hₒ3 aufweist, und wobei Hₒ1 > Hₒ2 > Hₒ3 ist, um den Unterschied zwischen den ersten und den zweiten Luftstrombereichen sowie den Unterschied zwischen den zweiten und den dritten Luftstrombereichen zu erzielen.

5. System nach Anspruch 4, wobei jede Kraftstoffdüse der ersten, zweiten und dritten Vielzahl von Kraftstoffdüsen einen gleichen äußeren Luftmanteldurchmesser aufweist.

6. System nach einem der vorhergehenden Ansprüche, wobei jede Kraftstoffdüse der ersten, zweiten und dritten Vielzahl von Kraftstoffdüsen (110, 112, 114) einen äußeren Luftkreislauf aufweist, der einzelne, um die Düse herum angeordnete Löcher umfasst,
wobei die einzelnen Löcher der ersten Vielzahl von Kraftstoffdüsen (110) einen ersten Lochdurchmesser dₒ1 aufweisen,
wobei die einzelnen Löcher der zweiten Vielzahl von Kraftstoffdüsen (112) einen zweiten Lochdurchmesser dₒ2 aufweisen,
wobei die einzelnen Löcher der dritten Vielzahl von Kraftstoffdüsen (114) einen dritten Lochdurchmesser dₒ3 aufweisen.

7. System nach Anspruch 6, wobei dₒ1 > dₒ2 > dₒ3 ist, um die Differenz zwischen den ersten und den zweiten Luftstrombereichen und die Differenz zwischen den zweiten und den dritten Luftstrombereichen zu erzielen, und/oder
wobei dₒ1 = dₒ2 = dₒ3 ist und wobei jede Kraftstoffdüse der ersten Vielzahl von Kraftstoffdüsen (110) mehr einzelne Löcher aufweist als die der zweiten Vielzahl von Kraftstoffdüsen (112), und
wobei jede Kraftstoffdüse der zweiten Vielzahl von Kraftstoffdüsen (112) mehr einzelne Löcher aufweist als die der dritten Vielzahl von Kraftstoffdüsen (114), um den Unterschied zwischen den ersten und den zweiten Luftstrombereichen und den Unterschied zwischen den zweiten und den dritten Luftstrombereichen zu erzielen.

8. System nach einem der vorhergehenden Ansprüche, wobei jede Kraftstoffdüse der ersten, zweiten und dritten Vielzahl von Kraftstoffdüsen (110, 112, 114) einen äußeren Luftkreislauf (126) aufweist, der Schaufeln (128) mit Schaufeldurchlässen (130) umfasst, die durch die Schaufeln (128) in Umfangsrichtung voneinander beabstandet sind, wobei die Schaufeldurchlässe (130) der ersten Vielzahl von Kraftstoffdüsen (110) eine größere Schaufeldurchlassfläche (aₒ1) als die (aₒ2) der zweiten Vielzahl von Kraftstoffdüsen (112) aufweisen, und wobei die Schaufeldurchlässe der zweiten Vielzahl von Kraftstoffdüsen (112) eine größere Schaufeldurchlassfläche (aₒ2) aufweisen als die (aₒ3) der dritten Vielzahl von Kraftstoffdüsen (114), um den Unterschied zwischen den ersten und den zweiten Luftstrombereichen und den Unterschied zwischen den zweiten und den dritten Luftstrombereichen zu erzielen.

9. System nach Anspruch 8, wobei die Schaufeldurchlassfläche aₒ1 eine größere Schaufeldurchlasshöhe und/oder größere Schaufeldurchlassbreite als die Schaufeldurchlassfläche aₒ2 aufweist und wobei die Schaufeldurchlassfläche aₒ2 eine größere Schaufeldurchlasshöhe und/oder größere Schaufeldurchlassbreite als eine dritte Schaufeldurchlassfläche aₒ3 der dritten Vielzahl von Kraftstoffdüsen (114) aufweist.

10. System nach einem der vorhergehenden Ansprüche, wobei jede Kraftstoffdüse der ersten, zweiten und dritten Vielzahl von Kraftstoffdüsen (110, 112, 114) einen inneren Luftkreislauf (132) aufweist, der einzelne, um die Düse herum angeordnete Löcher (136) umfasst,
wobei die einzelnen Löcher (136) der ersten Vielzahl von Kraftstoffdüsen (110) einen ersten Lochdurchmesser dᵢ1 aufweisen,
wobei die einzelnen Löcher (136) der zweiten Vielzahl von Kraftstoffdüsen (112) einen zweiten Lochdurchmesser dᵢ2 aufweisen,
wobei die einzelnen Löcher (136) der dritten Vielzahl von Kraftstoffdüsen (114) einen dritten Lochdurchmesser dᵢ3 aufweisen.

11. System nach Anspruch 10, wobei dᵢ1 > dᵢ2 > dᵢ3 ist, um die Differenz zwischen den ersten und den zweiten Luftstrombereichen und die Differenz zwischen den zweiten und den dritten Luftstrombereichen zu erzielen.

12. System nach Anspruch 10 oder 11, wobei dᵢ1 = dᵢ2 = dᵢ3 ist und wobei jede Kraftstoffdüse der ersten Vielzahl von Kraftstoffdüsen (110) mehr einzelne Löcher (136) aufweist als die der zweiten Vielzahl von Kraftstoffdüsen (112), und wobei jede Kraftstoffdüse der zweiten Vielzahl von Kraftstoffdüsen (112) mehr einzelne Löcher (136) aufweist als die der dritten Vielzahl von Kraftstoffdüsen (114), um den Unterschied zwischen den ersten und den zweiten Luftstrombereichen und den Unterschied zwischen den zweiten und den dritten Luftstrombereichen zu erzielen.

13. System nach einem der vorhergehenden Ansprüche, wobei jede Kraftstoffdüse der ersten, zweiten und dritten Vielzahl von Kraftstoffdüsen (110, 112, 114) einen inneren Luftkreislauf aufweist, der Schaufeln mit Schaufeldurchlässen umfasst, die durch die Schaufeln in Umfangsrichtung voneinander beabstandet sind, wobei die Schaufeldurchlässe der ersten Vielzahl von Kraftstoffdüsen (110) eine größere Schaufeldurchlassfläche (aᵢ1) als die (aᵢ2) der zweiten Vielzahl von Kraftstoffdüsen (112) aufweisen, und wobei die Schaufeldurchlässe der zweiten Gruppe von Kraftstoffdüsen (112) eine größere Schaufeldurchlassfläche (aᵢ2) aufweisen als die (aᵢ3) der dritten Gruppe von Kraftstoffdüsen (114), um den Unterschied zwischen den ersten und den zweiten Luftstrombereichen und den Unterschied zwischen den zweiten und den dritten Luftstrombereichen zu erzielen.

14. System nach Anspruch 13, wobei die Schaufeldurchlassfläche aᵢ1 eine größere Schaufeldurchlasshöhe und/oder eine größere Schaufeldurchlassbreite als die Schaufeldurchlassfläche aᵢ2 aufweist und wobei die Schaufeldurchlassfläche aᵢ2 eine größere Schaufeldurchlasshöhe und/oder eine größere Schaufeldurchlassbreite als eine dritte Schaufeldurchlassfläche aᵢ3 der dritten Vielzahl von Kraftstoffdüsen aufweist.

## Revendications

1. Système d'injection de carburant (100) pour un moteur à turbine à gaz (102) comprenant :
une première pluralité de buses de carburant (110) disposées en réseau selon un motif circulaire, dans lequel chacune des buses de la première pluralité de buses de carburant (110) comporte une première zone de flux d'air, A1, définie à travers elle et desservant un premier volume d'espace de combustion, V1 ;
une deuxième pluralité de buses de carburant (112) radialement vers l'intérieur à partir de la première pluralité de buses de carburant (110), dans lequel chacune des buses de la deuxième pluralité de buses de carburant comporte une deuxième zone de flux d'air, A2, définie à travers elle et desservant un deuxième volume d'espace de combustion, V2 ; et
comprenant également une troisième pluralité de buses de carburant (114) radialement vers l'intérieur à partir de la deuxième pluralité de buses de carburant (112), dans lequel chacune des buses de la troisième pluralité de buses de carburant (113) comporte une troisième zone de flux d'air, A3, définie à travers elle et desservant un troisième volume d'espace de combustion, V3 ; et
dans lequel chacune des première, deuxième et troisième pluralités de buses de carburant (110, 112, 114) comporte un nombre égal de buses de carburant ;
dans lequel chaque buse (110) dessert un volume V1 plus grand de l'espace de combustion que chaque buse (112), et chaque buse (112) dessert un volume V2 plus grand que celui V3 desservi par chaque buse (114) ;
dans lequel la troisième pluralité de buses de carburant (114) sont positionnées à l'intérieur d'un anneau présentant un diamètre intérieur (D1) et un diamètre extérieur (D2),
dans lequel la deuxième pluralité de buses de carburant (112) sont positionnées à l'intérieur d'un anneau présentant un diamètre intérieur (D2) et un diamètre extérieur (D3) ;
dans lequel la première pluralité de buses de carburant (110) sont positionnées à l'intérieur d'un anneau présentant un diamètre intérieur (D3) et un diamètre extérieur (D4),
et dans lequel D4-D3 = D3-D2 = D2-D1 ;
**caractérisé en ce que**
la première zone de flux d'air, A1, est plus grande que la deuxième zone de flux d'air, A2, et la deuxième zone de flux d'air, A2, est plus grande que la troisième zone de flux d'air, A3 de manière à compenser les différents volumes respectifs V1, V2, V3 desservis par chaque buse (110, 112, 114) pour une combustion uniforme.

2. Système selon la revendication 1, comprenant également au moins une pluralité supplémentaire de buses de carburant, chacune radialement vers l'intérieur à partir d'une autre une des pluralités de buses de carburant, et chacune présentant une zone de flux d'air plus petite qu'une de la pluralité de buses de carburant qui est immédiatement radialement vers l'extérieur de celle-ci.

3. Système selon une quelconque revendication précédente,
dans lequel les première, deuxième et troisième zones de flux de carburant sont chacune alimentées par des collecteurs de carburant respectifs séparés, dans lequel la première zone de flux de carburant est mise sous une pression supérieure à celle de la deuxième zone de flux de carburant, qui est mise sous une pression supérieure à celle de la troisième zone de flux de carburant, dans lequel la mise sous pression des collecteurs de carburant respectifs séparés est proportionnelle aux zones de flux d'air respectives des première, deuxième et troisième pluralités de buses de carburant.

4. Système selon une quelconque revendication précédente,
dans lequel chaque buse de carburant de la première pluralité de buses de carburant (110) présente une hauteur de canal définie entre un préfiltre et un carénage d'air extérieur, Hₒ1,
dans lequel chaque buse de carburant de la deuxième pluralité de buses de carburant (112) présente une hauteur de canal définie entre un préfiltre et un carénage d'air extérieur, Hₒ2,
dans lequel chaque buse de carburant de la troisième pluralité de buses de carburant (114) présente une hauteur de canal définie entre un préfiltre et un carénage d'air extérieur, Hₒ3, et
dans lequel Hₒ1 > Hₒ2 > Hₒ3 pour obtenir la différence dans les première et deuxième zones de flux d'air, et la différence entre les deuxième et troisième zones de flux d'air.

5. Système selon la revendication 4, dans lequel chaque buse de carburant des première, deuxième et troisième pluralités de buses de carburant présente un diamètre de carénage d'air extérieur égal.

6. Système selon une quelconque revendication précédente, dans lequel chaque buse de carburant des première, deuxième et troisième pluralités de buses de carburant (110, 112, 114) présente un circuit d'air extérieur composé de trous distincts répartis circonférentiellement autour de la buse,
dans lequel les trous distincts de la première pluralité de buses de carburant (110) présentent un premier diamètre de trou dₒ1,
dans lequel les trous distincts de la deuxième pluralité de buses de carburant (112) présentent un deuxième diamètre de trou dₒ2,
dans lequel les trous distincts de la troisième pluralité de buses de carburant (114) présentent un troisième diamètre de trou dₒ3.

7. Système selon la revendication 6, dans lequel dₒ1 > dₒ2 > dₒ3 pour obtenir la différence dans les première et deuxième zones de flux d'air, et la différence entre les deuxième et troisième zones de flux d'air, et/ou
dans lequel dₒ1 = dₒ2 = dₒ3, et dans lequel chaque buse de carburant de la première pluralité de buses de carburant (110) présente plus de trous distincts que ceux de la deuxième pluralité de buses de carburant (112), et
dans lequel chaque buse de carburant de la deuxième pluralité de buses de carburant (112) présente plus de trous distincts que ceux de la troisième pluralité de buses de carburant (114) pour obtenir la différence dans les première et deuxième zones de flux d'air, et la différence entre les deuxième et troisième zones de flux d'air.

8. Système selon une quelconque revendication précédente, dans lequel chaque buse de carburant dans les première, deuxième et troisième pluralités de buses de carburant (110, 112, 114) présente un circuit d'air extérieur (126) composé d'aubes (128) avec des passages d'aube (130) espacés circonférentiellement par les aubes (128), dans lequel les passages d'aube (130) de la première pluralité de buses de carburant (110) présentent une zone de passage d'aube aₒ1 plus grande que celle (aₒ2) de la deuxième pluralité de buses de carburant (112), et dans lequel les passages d'aube de la deuxième pluralité de buses de carburant (112) présentent une zone de passage d'aube (aₒ2) plus grande que celle (aₒ3) de la troisième pluralité de buses de carburant (114), pour obtenir la différence dans les première et deuxième zones de flux d'air, et la différence entre les deuxième et troisième zones de flux d'air.

9. Système selon la revendication 8, dans lequel la zone de passage d'aube aₒ1 présente une hauteur de passage d'aube plus grande et/ou une largeur de passage d'aube plus grande que la zone de passage d'aube aₒ2, et dans lequel la zone de passage d'aube aₒ2 présente une hauteur de passage d'aube plus grande et/ou une largeur de passage d'aube plus grande qu'une troisième zone de passage d'aube aₒ3 de la troisième pluralité de buses de carburant (114).

10. Système selon une quelconque revendication précédente, dans lequel chaque buse de carburant des première, deuxième et troisième pluralités de buses de carburant (110, 112, 114) présente un circuit d'air intérieur (132) composé de trous distincts (136) répartis circonférentiellement autour de la buse,
dans lequel les trous distincts (136) de la première pluralité de buses de carburant (110) présentent un premier diamètre de trou dᵢ1,
dans lequel les trous distincts (136) de la deuxième pluralité de buses de carburant (112) présentent un deuxième diamètre de trou dᵢ2,
dans lequel les trous distincts (136) de la troisième pluralité de buses de carburant (114) présentent un troisième diamètre de trou dᵢ3.

11. Système selon la revendication 10, dans lequel dᵢ1 > dᵢ2 > dᵢ3 pour obtenir la différence dans les première et deuxième zones de flux d'air, et la différence entre les deuxième et troisième zones de flux d'air

12. Système selon les revendications 10 ou 11, dans lequel dᵢ1 = dᵢ2 = dᵢ3, et dans lequel chaque buse de carburant de la première pluralité de buses de carburant (110) présente plus de trous distincts (136) que ceux de la deuxième pluralité de buses de carburant (112), et dans lequel chaque buse de carburant de la deuxième pluralité de buses de carburant (112) présente plus de trous distincts (136) que ceux de la troisième pluralité de buses de carburant (114) pour obtenir la différence dans les première et deuxième zones de flux d'air, et la différence entre les deuxième et troisième zones de flux d'air.

13. Système selon une quelconque revendication précédente, dans lequel chaque buse de carburant dans les première, deuxième et troisième pluralités de buses de carburant (110, 112, 114) présente un circuit d'air intérieur composé d'aubes avec des passages d'aube espacés circonférentiellement par les aubes, dans lequel les passages d'aube de la première pluralité de buses de carburant (110) présentent une zone de passage d'aube aᵢ1 plus grande que celle (aᵢ2) de la deuxième pluralité de buses de carburant (112), et dans lequel les passages d'aube de la deuxième pluralité de buses de carburant (112) présentent une zone de passage d'aube (aᵢ2) plus grande que celle (aᵢ3) de la troisième pluralité de buses de carburant (114), pour obtenir la différence dans les première et deuxième zones de flux d'air, et la différence entre les deuxième et troisième zones de flux d'air.

14. Système selon la revendication 13, dans lequel la zone de passage d'aube aᵢ1 présente une hauteur de passage d'aube plus grande et/ou une largeur de passage d'aube plus grande que la zone de passage d'aube aᵢ2, et dans lequel la zone de passage d'aube aᵢ2 présente une hauteur de passage d'aube plus grande et/ou une largeur de passage d'aube plus grande qu'une troisième zone de passage d'aube aᵢ3 de la troisième pluralité de buses de carburant.
